# EUROPÄISCHE PATENTSCHRIFT

(11) **EP 1 912 827 B1**
(45) Veröffentlichungstag und Bekanntmachung des Hinweises auf die Patenterteilung: **06.04.2016**
(21) Anmeldenummer: 06761685.4
(22) Anmeldetag: 22.06.2006
(51) Int. Cl.: B60Q 1/04

(54) **VORRICHTUNG ZUR JUSTIERBAREN BEFESTIGUNG EINES SCHEINWERFERS**
DEVICE FOR THE ADJUSTABLE FIXING OF A HEADLAMP
DISPOSITIF DE FIXATION REGLABLE D'UN PHARE

(30) Priorität: 08.08.2005 DE 102005037816
(43) Veröffentlichungstag der Anmeldung: 23.04.2008
(73) Patentinhaber: Hella KGaA Hueck & Co., 59552 Lippstadt (DE); HBPO GmbH, 59557 Lippstadt (DE)
(72) Erfinder: KERSTING, Dirk, 59555 Lippstadt (DE); SCHMIDT, Andre, 59073 Hamm (DE)
(74) Vertreter: Ostermann, Thomas
(86) Internationale Anmeldenummer: PCT/DE2006/001064
(87) Internationale Veröffentlichungsnummer: WO 2007/016888

(56) Entgegenhaltungen:
- DE-A1- 10 048 279
- DE-A1- 19 949 467
- DE-C1- 19 636 029
- FR-A- 2 727 479

## Beschreibung

Die Erfindung betrifft eine Vorrichtung zur justierbaren Befestigung eines Scheinwerfers nach dem Oberbegriff des Patentanspruchs 1.

Aus der EP 0 978 416 A2 ist eine Vorrichtung zur justierbaren Befestigung eines Scheinwerfers mit einem Gehäuse in einer Karosserieöffnung eines Kraftfahrzeugs bekannt, bei der an einem oberen oder unteren Befestigungspunkt im Bereich des Gehäuses ein quer zur Abstrahlrichtung des Scheinwerfers verschiebbarer Halter vorgesehen ist. Der Halter wird dabei in eine Längsnut einer Lasche des Scheinwerfergehäuses eingesetzt und ermöglicht nach Verdrehen desselben um 90° eine relative Verschiebung des Scheinwerfergehäuses zu einem Trägerteil des Kraftfahrzeugs entlang einer quer zur Abstrahlrichtung verlaufenden Justierrichtung. Die bekannte Vorrichtung, die sich in der Praxis bewährt hat, weist jedoch den Nachteil auf, dass ein Festlegen des Scheinwerfergehäuses an dem Trägerteil im Wesentlichen an mindestens einem anderen Befestigungspunkt erfolgt, an dem üblicher Weise die Justierung des Scheinwerfergehäuses in einer anderen Richtung zusätzlich eingestellt wird. Das Erfordernis der Justierung des Scheinwerfergehäuses in zwei senkrecht zueinander stehende Richtungen bedeutet jedoch einen relativ großen Aufwand bei der Ausrichtung des Scheinwerfergehäuses entsprechend einem vorgegebenen Fugenverlauf an den umgebenden Karosserieteilen.

Aus der FR 2 727 479 A1 ist eine Vorrichtung zur justierbaren Befestigung eines Scheinwerfers in einer Karosserieöffnung eine Kraftfahrzeugs bekannt, bei der eine Justierbarkeit des Scheinwerfers in zwei senkrecht zueinander verlaufende Justierrichtungen vorgesehen ist. Durch das Einsetzen eines Klemmbausteins wird das gleichzeitige Justieren in X-Richtung und Y-Richtung ermöglicht. Eine endgültige Fixierung der miteinander zu befestigenden Bauteile erfolgt durch Einsetzen einer Schraube.

Aufgabe der vorliegenden Erfindung ist es daher, eine Vorrichtung zur justierbaren Befestigung eines Scheinwerfers derart weiterzubilden, dass die Justierung des Scheinwerfergehäuses insbesondere zur Einstellung eines vorgegebenen Fugenverlaufes zu den umgebenden Karosserieteilen vereinfacht wird.

Zur Lösung dieser Aufgabe weist die Erfindung die Merkmale des Patentanspruchs 1 auf.

Der besondere Vorteil der Erfindung besteht darin, dass eine Justierung des Scheinwerfergehäuses mittels des Halters ausschließlich in eine einzige vorgegebene Justierrichtung ermöglicht wird, ohne dass gleichzeitig eine Ausrichtung des Scheinwerfergehäuses in eine andere Richtung als der Justierrichtung erforderlich ist. Grundgedanke der Erfindung ist es, dass Justiermittel vorgesehen sind, derart, dass das Scheinwerfergehäuse entweder nur in einer ersten Justierrichtung oder nur in einer zweiten Justierrichtung, die senkrecht zur ersten Justierrichtung verläuft, ausrichtbar ist. Auf diese Weise kann eine separate Ausrichtung des Scheinwerfergehäuses in einer ersten Justierrichtung unabhängig von der zweiten Justierrichtung erfolgen. Hierdurch wird die Ausrichtung des Scheinwerfergehäuses an einem vorgegebenen Fugenverlauf einer Karosserieöffnung wesentlich vereinfacht. Nach der Erfindung umfasst die Blockierrichtung ein Festlegelement sowie eine Festlegplatte, die auf den Halter einpressend einwirkt. Vorteilhaft kann somit die Blockiereinrichtung an einem Ort angeordnet sein, während der Halter entlang der Justierrichtung verschiebbar gelagert ist.

Die erfindungsgemäße Blockiereinrichtung ermöglicht durch Entriegelung und Verriegelung derselben ein einfaches Einstellen des Halters entlang der ersten Justierrichtung. Durch Verriegeln der Blockiereinrichtung ist das Scheinwerfergehäuse in der ersten Justierrichtung festgelegt.

Nach einer bevorzugten Ausführungsform der Erfindung weist der Halter Führungsmittel auf, so dass eine Lasche des Gehäuses in einer Justierrichtung verschiebbar zum Halter angeordnet ist, die senkrecht zu einer weiteren Justierrichtung verläuft, entlang der der Halter relativ zu dem Karosserieteil verschiebbar ist. Vorteilhaft wird hierdurch eine Entkopplung der Justierung an einem Befestigungspunkt ermöglicht. Das Scheinwerfergehäuse kann zusammen mit dem Halter entlang einer ersten Justierrichtung und relativ zu dem Halter entlang einer senkrecht zur ersten Justierrichtung stehenden zweiten Justierrichtung ausgerichtet werden.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:

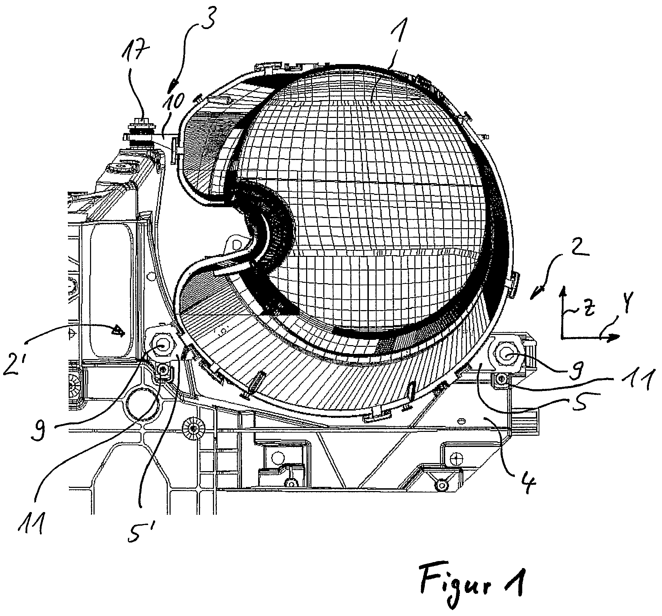

- Figur 1: eine schematische Vorderansicht eines an einem Trägerteil eines Kraftfahrzeugs befestigten Scheinwerfergehäuses und

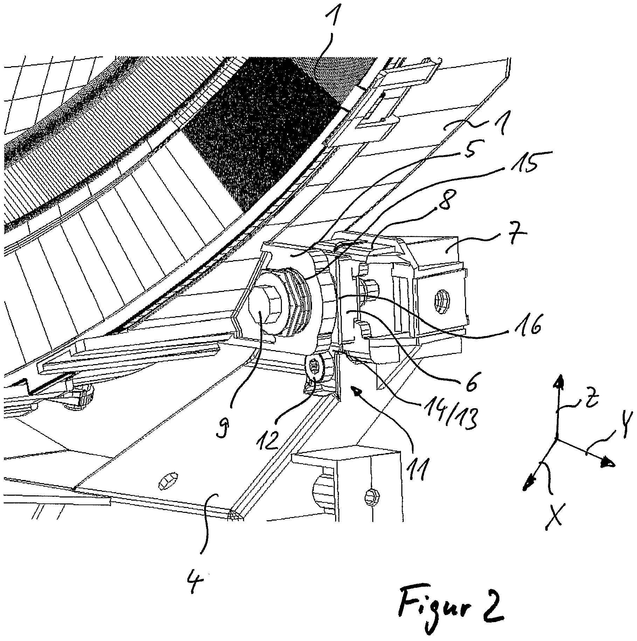

- Figur 2: eine perspektivische Darstellung eines Befestigungspunktes des Scheinwerfergehäuses an dem Trägerteil.

Eine Vorrichtung zur justierbaren Befestigung eines Scheinwerfers besteht im Wesentlichen aus einem Gehäuse 1 des Scheinwerfers, das an zwei unteren Befestigungspunkten 2, 2' und einem oberen Befestigungspunkt 3 an einem Trägerteil 4 eines Kraftfahrzeugs befestigt ist.

Das Trägerteil 4 kann beispielsweise als Montageträger eines Frontendmoduls ausgebildet sein, das mit einem integriertem Kühlaggregat, einem Scheinwerfergehäuse sowie einem Stoßfänger an einem Karosserieteil des Kraftfahrzeugs montierbar ist. Hierbei ist die Möglichkeit der Nachjustierung des Scheinwerfergehäuses 1 in Relation zu dem Fugenverlauf der sich an dem Scheinwerfergehäuse 1 anschließenden Karosseriekontur, die beispielsweise eine Motorhaube sein kann, erforderlich. Alternativ kann das Trägerteil 4 auch als ein Karosserieteil des Kraftfahrzeugs ausgebildet sein, wobei die erfindungsgemäße Justiervorrichtung eine Justierung des Scheinwerfergehäuses in einer Karosserieöffnung des Kraftfahrzeugs unter Einhaltung eines vorgegebenen Fugenverlaufes ermöglicht.

An den untern Befestigungspunkten 2, 2' weist das Gehäuse 1 des Scheinwerfers jeweils eine quer zur Lichtabstrahlrichtung des Scheinwerfers abragende Lasche 5, 5' auf, die jeweils über einen plattenförmigen und quaderförmigen Halter 6 verschieblich entlang einer ersten Justierrichtung Y zu einem Aufnahmeteil 7 des Trägerteils 4 angeordnet ist. Zu diesem Zweck ist der Halter 6 über eine als Führung dienende Schiene 8 an dem Aufnahmeteil 7 verschiebbar gelagert.

Die Lasche 5, 5' ist über eine mit einer Unterlegscheibe versehenen Schraube 9, 9' durch Verschraubung mit dem Halter 6 lösbar verbunden. Nach Ansetzen des Gehäuses 1 an dem Trägerteil 4 unter Verschraubung der in einem unteren Bereich des Gehäuses 1 angeordneten Laschen 5, 5' an dem Halter 6 und einer in einem oberen Bereich des Gehäuses 1 angeordneten Lasche 10 (oberer Befestigungspunkt 3) an dem Trägerteil 4 kann eine Ausrichtung des Gehäuses 1 entlang der ersten Justierrichtung Y erfolgen. Zu diesem Zweck ist der Halter 6 über die Schiene 8 spielfrei zum einen entlang einer senkrecht zur ersten Justierrichtung Y stehenden zweiten Justierrichtung Z und zum anderen entlang einer dritten Justierrichtung X, die beide senkrecht zur ersten Justierrichtung Y stehen, gelagert.

Zum Verschieben des Halters 6 zusammen mit dem Gehäuse 1 ist ein Entriegeln einer Blockiereinrichtung 11 erforderlich, die relativ zum Halter 6 ortsfest mit einem Festlegelement 12 und einer Festlegplatte 13 unterhalb des Halters 6 angeordnet ist. Das Festlegelement 12 ist als eine Schraube ausgebildet, die auf eine parallel zum Halter 6 erstreckende Festlegplatte 13 einwirkt, so dass in einer Verriegelungsstellung der Blockiereinrichtung 11 durch Anziehen des Festlegelementes 12 ein oberer Kantenbereich 14 der Festlegplatte 13 randseitig auf den Halter 6 fest anliegt und diesen gegenüber dem Aufnahmeteil 7 festlegt. In der Entriegelungsstellung der Blockiereinrichtung 11 ist das Festlegelement 12 gelöst angeordnet, so dass keine Anpresskraft von der Festlegplatte 13 auf den Halter 6 ausgeht. Der Halter 6 kann nun in die entsprechende Justierposition kontinuierlich verschoben werden, die durch Verriegeln der Blockiereinrichtung 11 festgelegt wird.

Zur Justierung des Gehäuses 1 in der zweiten Justierrichtung Z ist die Lasche 5, 5' als ein Langlochteil ausgebildet, dessen Langloch 15 sich in der zweiten Justierrichtung Z erstreckt. Der Halter 6 verfügt über randseitige, entlang der zweiten Justierrichtung Z verlaufende Führungskanten 16 als Führungsmittel, so dass das Langlochteil 5, 5' relativ zum Halter 6 in der zweiten Justierrichtung Z verschiebbar ist. Die Länge des Langlochs 15 gibt den Justierweg entlang der zweiten Justierrichtung Z vor.

Die Schraube 9, 9', über die das Langlochteil 5, 5' an dem Halter 6 festlegbar ist, erstreckt sich parallel zu der Festlegschraube 12 der Blockiereinrichtung 11. Die Schraube 9, 9' der unteren Befestigungspunkte 2, 2', die gleichartig in der ersten Justierrichtung Y und der zweiten Justierrichtung Z unabhängig voneinander justierbar sind, verlaufen senkrecht zu einer Schraube 17, über die die obere Lasche 10 des oberen Befestigungspunktes 3 an dem Trägerteil 4 befestigt ist. Die obere Lasche 10 weist ein sich in der dritten Justierrichtung X verlaufendes Langloch auf, so dass eine Justierung des Gehäuses 1 in der dritten Justierrichtung X ermöglicht wird. Durch Festlegen der Schraube 17 wird die Justierung des Gehäuses 1 in der dritten Justierrichtung X festgelegt.

Der Halter 6 ist vorzugsweise als ein spritzgegossenes Kunststoffteil ausgebildet. Vorzugsweise kann der Halter 6 eine eingelegte Metallverstärkung aufweisen.

Vorzugsweise weist der Halter 6 eine Bohrung mit einem Innengewinde auf zur Aufnahme der Schraube 9, 9'. Alternativ kann die Befestigung der Lasche 5, 5' auch durch eine Schraube 9, 9' verwirklicht werden, die durch eine gewindelose Bohrung des Halters 6 hindurchgesteckt ist und mit einer rückseitigen Mutter verspannt ist.

Alternativ kann die Schraube 9, 9' auch als eine selbstschneidende Gewindeschraube ausgebildet sein, die in eine Kunststoffbohrung des Halters 6 eingreift.

Die den unteren Befestigungspunkten 2, 2' zugeordneten Halter 6 ermöglichen die Justierung entlang der ersten Justierrichtung Y. Alternativ kann die Schiene 8 des Aufnahmeteils 7 auch in der zweiten Justierrichtung Z oder in der dritten Justierrichtung X verlaufen. Hierdurch ergibt sich dann eine Ausrichtmöglichkeit an den unteren Befestigungspunkten 2, 2' in einer Y-X- oder Z-X-Ebene.

Nach einer alternativen Ausführungsform können die Laschen 5, 5' auch nachgiebig ausgebildet sein, so dass ein Verkippen des Gehäuses 1 unter Bildung eines spitzen Winkels zu den Justierrichtungen Y, Z, X ermöglicht wird.

## Patentansprüche

1. Vorrichtung zur justierbaren Befestigung eines Scheinwerfers mit einem Gehäuse (1) in einer Karosserieöffnung eines Kraftfahrzeugs, mit mindestens einem in einem in vertikaler Richtung unteren Bereich des Gehäuses (1) angeordneten unteren Befestigungspunkt (2,2') und mit mindestens einem in einem in vertikaler Richtung oberen Bereich des Gehäuses (1) angeordneten oberen Befestigungspunkt (3), wobei eine Lasche (5,5') des Gehäuses (1) an dem oberen oder unteren Befestigungspunkt (2,2',3) über einen quer zur Abstrahlrichtung des Scheinwerfers verlaufenden und entlang einer ersten Justierrichtung (Y) verschiebbaren Halter (6) mit einem Trägerteil (4) verbunden ist, wobei der Halter (6) über eine Führung (8) in der ersten Justierrichtung (Y) verschiebbar zu dem Trägerteil (4) gelagert ist und wobei dem Halter (6) eine Blockiereinrichtung (11) zugeordnet ist zur Fixierung des Halters (6) in der ersten Justierrichtung (Y), **dadurch gekennzeichnet, dass** die Blockiereinrichtung (11) relativ zum Halter (6) ortsfest angeordnet ist und ein mit dem Trägerteil (4) verbundenes Festlegelement (12) und eine Festlegplatte (13) umfasst, wobei in einer Verriegelungsstellung der Blockiereinrichtung (11) die Festlegplatte (13) mit Betätigen des Festlegeelementes (12) fixierend auf den Halter (6) einwirkt.

2. Vorrichtung nach Anspruch 1, **dadurch gekennzeichnet, dass** der Halter (6) Führungsmittel (16) aufweist, derart, dass die Lasche (5, 5') des Gehäuses (1) um eine senkrecht zur ersten Justierrichtung (Y) stehenden zweiten Justierrichtung (Z) verschiebbar zu dem Halter (6) gelagert ist.

3. Vorrichtung nach Anspruch 1 oder 2, **dadurch gekennzeichnet, dass** die Lasche (5, 5') als ein Langlochteil ausgebildet ist, das ein senkrecht zur ersten Justierrichtung (Y) verlaufendes und eine zweite Justierrichtung (Z) vorgebendes Langloch (15) aufweist.

4. Vorrichtung nach einem der Ansprüche 1 bis 3, **dadurch gekennzeichnet, dass** die Blockiereinrichtung (11) derart ausgebildet ist, dass der Halter (6) kontinuierlich in der ersten Justierrichtung (Y) verschiebbar und fixierbar ist.

5. Vorrichtung nach einem der Ansprüche 1 bis 4, **dadurch gekennzeichnet, dass** das Langlochteil (5, 5') durch Verschraubung mit dem Halter (6) verbunden ist.

6. Vorrichtung nach einem der Ansprüche 1 bis 5, **dadurch gekennzeichnet, dass** das Festlegelement (12) der Blockiereinrichtung (11) parallel versetzt zu einer Verschraubung (9, 9') des Langlochteils (5, 5') angeordnet ist.

7. Vorrichtung nach einem der Ansprüche 1 bis 6, **dadurch gekennzeichnet, dass** die Führungsmittel des Halters (6) eine in der zweiten Justierrichtung (Z) verlaufende Führungskante (16) umfasst, die sich zumindest an einer Randseite des Halters (6) erstreckt.

8. Vorrichtung nach einem der Ansprüche 1 bis 7, **dadurch gekennzeichnet, dass** das Festlegelement (12) der Blockiereinrichtung (11) als eine Festlegschraube ausgebildet ist.

9. Vorrichtung nach einem der Ansprüche 1 bis 8, **dadurch gekennzeichnet, dass** der Halter (6) als ein quaderförmiges Kunststoffteil ausgebildet ist.

## Claims

1. A device for the adjustable fixing of a headlamp including a housing (1) within a body opening of a motor vehicle, comprising at least one lower fastening point (2, 2') arranged in a lower area of the housing (1), as seen in the vertical direction, and at least one upper fastening point (3) arranged in an upper area of the housing (1), as seen in the vertical direction, wherein a tab (5, 5') of the housing (1) is connected, at the upper or lower fastening point (2, 2', 3), to a support part (4) by means of a holder (6) which extends transversely to the emission direction of the headlamp and is slidable along a first adjustment direction (Y), wherein the holder (6) is supported, by means of a guide (8), so as to be slidable relative to the support part (4) in the first adjustment direction (Y), and wherein a blocking unit (11) is assigned to the holder (6) for fixing the holder (6) in place in the first adjustment direction (Y), **characterized in that** the blocking unit (11) is stationary relative to the holder (6) and comprises a locking element (12), which is connected to the support part (4), and a locking plate (13), wherein, in a locked position of the blocking unit (11), the locking plate (13) acts on the holder (6) so as to fix it in place when the fixing element (12) is actuated.

2. The device according to claim 1, **characterized in that** the holder (6) has guide means (16), such that the tab (5, 5') of the housing (1) is supported so as to be slidable relative to the holder (6) about a second adjustment direction (Z) which is at right angles to the first adjustment direction (Y).

3. The device according to claim 1 or 2, **characterized in that** the tab (5, 5') is designed as a part with an elongated hole, which has an elongated hole (15) extending at right angles to the first adjustment direction (Y) and predefining a second adjustment direction (Z).

4. The device according to any one of claims 1 to 3, **characterized in that** the blocking unit (11) is designed such that the holder (6) is continuously slidable and fixable in place in the first adjustment direction (Y).

5. The device according to any one of claims 1 to 4, **characterized in that** the part with the elongated hole (5, 5') is connected to the holder (6) by screwing.

6. The device according to any one of claims 1 to 5, **characterized in that** the locking element (12) of the blocking unit (11) is offset in parallel to a screwed connection (9, 9') of the part with the elongated hole (5, 5').

7. The device according to any one of claims 1 to 6, **characterized in that** the guide means of the holder (6) comprise a guide edge (16) extending in the second adjustment direction (Z) and extending at least on a lateral side of the holder (6).

8. The device according to any one of claims 1 to 7, **characterized in that** the locking element (12) of the blocking unit (11) is designed as a locking screw.

9. The device according to any one of claims 1 to 8, **characterized in that** the holder (6) is designed as a cuboid plastic part.

## Revendications

1. Dispositif de fixation d'un phare, qui comprend un boîtier (1) logé dans une ouverture de la carrosserie d'un véhicule automobile, avec au moins un point de fixation inférieur (2, 2'), disposé dans une zone inférieure du boîtier (1), dans la direction verticale, et avec au moins un point de fixation supérieur (3), disposé dans une zone supérieure du boîtier (1), dans la direction verticale, sachant qu'une patte (5, 5') du boîtier (1) est reliée, au point de fixation inférieur ou au point de fixation supérieur (2, 2', 3), à une pièce de support (4), par l'intermédiaire d'un support (6) qui s'étend transversalement par rapport à la direction de rayonnement du phare et peut être déplacé dans une première direction de réglage (Y), sachant que le support (6) peut être déplacé par rapport à la pièce de support (4), dans une première direction de réglage (Y), par l'intermédiaire d'un guidage (8) et le support (6) étant associé à un dispositif de blocage (11) pour la fixation du support (6) dans la première direction de réglage (Y), **caractérisé en ce que** le dispositif de blocage (11) est fixe par rapport au support (6) et comprend un élément de blocage (12), qui est relié à la pièce de support (4), et une plaque de blocage (13), sachant que, dans une position de verrouillage du dispositif de blocage (11), la plaque de blocage (13) agit sur le support (6), l'actionnement de l'élément de blocage (12) donnant lieu à une fixation.

2. Dispositif selon la revendication 1, **caractérisé en ce que** le support (6) présente des moyens de guidage (16) tels que la patte (5, 5') du boîtier (1) puisse être déplacée par rapport au support (6) dans une deuxième direction de réglage (Z), perpendiculaire à la première direction de réglage (Y).

3. Dispositif selon revendication 1 ou 2, **caractérisé en ce que** la patte (5, 5') est réalisée en forme de pièce à trou oblong, lequel trou oblong (15) s'étend perpendiculairement à la première direction de réglage (Y) et prédétermine une deuxième direction de réglage (Z).

4. Dispositif selon l'une des revendications 1 à 3, **caractérisé en ce que** le dispositif de blocage (11) est conçu de telle manière que le support (6) puisse être déplacé et fixé en continu dans la première direction de réglage (Y).

5. Dispositif selon l'une des revendications 1 à 4, **caractérisé en ce que** la pièce à trou oblong (5, 5') est reliée au support (6) par vissage.

6. Dispositif selon l'une des revendications 1 à 5, **caractérisé en ce que** l'élément de blocage (12) du dispositif de blocage (11) est parallèlement décalé par rapport à un système de vissage (9. 9') de la pièce à trou oblong (5, 5').

7. Dispositif selon l'une des revendications 1 à 6, **caractérisé en ce que** le moyen de guidage du support (6) comprend un bord de guidage (16) qui s'étend dans la deuxième direction de réglage (Z), au moins sur un côté du support (6).

8. Dispositif selon l'une des revendications 1 à 7, **caractérisé en ce que** l'élément de blocage (12) du dispositif de blocage (11) est prévu sous la forme d'une vis de blocage.

9. Dispositif selon l'une des revendications 1 à 8, **caractérisé en ce que** le support (6) est réalisé sous la forme d'une pièce quadrilatérale en matière synthétique.
